# DEMANDE DE BREVET EUROPEEN

(11) **EP 2 130 733 A1**
(43) Date de publication de la demande: **09.12.2009**
(21) Numéro de dépôt: 09160795.2
(22) Date de dépôt: 20.05.2009
(51) Int. Cl.: B60W 10/18, B60W 10/08, B60W 10/04, B60W 20/00

(54) **Gestion du roulage au ralenti d'un véhicule automobile**

(30) Priorité: 03.06.2008 FR 0853653
(71) Demandeur: Peugeot Citroën Automobiles Société Anonyme, 78140 Velizy Villacoublay (FR)
(72) Inventeur: Plantier, Matthieu Paul Louis Denis, 92500, RUEIL MALMAISON (FR); Krasznai, Joseph, 78250, MEZY SUR SEINE (FR); Habbani, Ridouane, 92110 Clichy (FR)

(57) **Abrégé**

L'invention concerne un dispositif de gestion de roulage au ralenti d'un véhicule (2) automobile comprenant un essieu (4), un groupe motopropulseur (6) pouvant être accouplé à l'essieu (4), un organe de commande (10) d'un couple délivré par le groupe motopropulseur (6), des moyens de freinage (12), un organe de commande (14) des moyens de freinage (12) et des moyens de pilotage (18) permettant de décorréler une consigne de l'organe de commande (14) d'une commande sur les moyens de freinage (12), le groupe motopropulseur (6) délivrant un couple minimal en l'absence d'action sur l'organe de commande (10) du couple. Selon l'invention, le dispositif (24) comporte une liaison (28) vers l'organe de commande (14) des moyens de freinage (12), une liaison (30) vers le groupe motopropulseur (6) permettant de transmettre une consigne de couple minimal et des moyens pour diminuer la consigne de couple minimal délivré par le groupe motopropulseur (6) en fonction du niveau d'action sur l'organe de commande (14) des moyens de freinage (12), les moyens de freinage (12) n'étant pas actionnés tant que la consigne de couple minimal n'est pas nulle.

## Description

L'invention concerne un procédé de gestion du roulage au ralenti d'un véhicule automobile et un dispositif permettant de mettre en oeuvre le procédé. Elle s'applique en particulier, mais pas exclusivement, aux véhicules automobiles hybrides équipés d'une boîte de vitesses gérée par un automate.

Dans les véhicules équipés d'une boite gérée par un automate, il est possible de créer un mode de fonctionnement particulier lors de roulages au ralenti. En effet, même en l'absence d'action sur la commande d'accélérateur du véhicule, un couple minimal, également appelé couple de traînée, est toujours transmis du groupe motopropulseur aux roues du véhicule. Ce couple minimal correspond par exemple au couple généré naturellement par des boîtes de vitesses automatiques ou au couple généré par un moteur thermique fonctionnant à son régime de ralenti, le couple étant transmis aux roues notamment par l'intermédiaire d'un embrayage en position embrayée ou en position glissant. Par souci d'uniformité, d'agrément de conduite et de sécurité, ce couple minimal est souvent recréé artificiellement sur toute chaîne de traction. En particulier, un couple minimal peut être recréé dans les véhicules automobiles équipés de machines électriques ou d'une combinaison d'un moteur thermique et d'une machine électrique. Un couple minimal peut également être recréé dans une chaîne de traction munie d'une boîte de vitesses manuelle pilotée ou d'une transmission continument variable. De façon connue, le conducteur du véhicule peut contrôler la vitesse du véhicule en appuyant plus ou moins sur une pédale de frein commandant un frein de service. L'action sur la pédale de frein commande proportionnellement le fonctionnement du frein de service. Habituellement, le frein de service est constitué de quatre organes de frein mécaniques, tels que des freins à disques ou des freins à tambour, reliés à un circuit hydraulique alimentant en liquide sous pression les organes de frein mécaniques en fonction de l'action sur la pédale de frein. Le frein de service exerce alors un couple de frein s'opposant à la rotation des roues du véhicule. En d'autres termes, la somme algébrique du couple de traînée et du couple de frein donne un couple résultant de valeur absolue inférieure à la valeur absolue du couple de traînée. Le contrôle de la vitesse d'un véhicule automobile par le frein de service lors de roulages au ralenti présente l'inconvénient de dissiper tout ou partie du couple de traînée dans les organes de frein. L'énergie correspondant à ce couple est alors perdue. De plus, la dissipation du couple de traînée dans les organes de frein augmente leur usure. Ces inconvénients sont d'autant plus gênants lorsque le véhicule se trouve dans une zone embouteillée, entraînant un roulage au ralenti pendant une durée relativement longue.

On connaît du brevet US 5,378,053 une méthode de gestion de la décélération commandée d'un véhicule automobile électrique selon laquelle des moyens de freinage distincts sont actionnés en fonction du niveau de la commande de décélération. Jusqu'à un premier niveau, seul un frein régénératif est utilisé pour freiner le véhicule. Jusqu'à un deuxième niveau, les organes de frein mécaniques de l'essieu arrière sont actionnés en sus du frein régénératif. Enfin, au-delà du deuxième niveau, les organes de frein mécaniques de l'essieu avant sont également actionnés. Cette méthode de gestion de la décélération est mal adaptée au roulage au ralenti. En particulier, il n'est pas possible de transmettre aux roues du véhicule un couple inférieur au couple minimal. Par conséquent, le véhicule électrique ne peut pas rouler à une vitesse constante correspondant audit couple.

Un but de l'invention est notamment de pallier tout ou partie des inconvénients précités en proposant un procédé de gestion du roulage au ralenti d'un véhicule automobile permettant de supprimer la dissipation du couple de traînée dans les organes de frein. A cet effet, l'invention a pour objet un dispositif de gestion de roulage au ralenti d'un véhicule automobile comprenant un essieu, un groupe motopropulseur pouvant être accouplé à l'essieu, un organe de commande d'un couple délivré par le groupe motopropulseur, des moyens de freinage, un organe de commande des moyens de freinage et des moyens de pilotage permettant de décorréler une consigne de l'organe de commande d'une commande sur les moyens de freinage. Le groupe motopropulseur délivre un couple minimal en l'absence d'action sur l'organe de commande du couple. Selon l'invention, le dispositif comporte une liaison vers l'organe de commande des moyens de freinage, une liaison vers le groupe motopropulseur permettant de transmettre une consigne de couple minimal et des moyens pour diminuer la consigne de couple minimal délivré par le groupe motopropulseur en fonction du niveau d'action sur l'organe de commande des moyens de freinage, les moyens de freinage n'étant pas actionnés tant que la consigne de couple minimal n'est pas nulle.

Selon une forme particulière de réalisation, le groupe motopropulseur comporte une machine électrique pouvant fonctionner dans un mode de génération d'énergie mécanique et dans un mode de génération d'énergie électrique et le dispositif comporte des moyens pour faire fonctionner la machine électrique dans le mode de génération d'énergie électrique lorsque la consigne de couple minimal délivré par le groupe motopropulseur devient nulle.

Selon une forme particulière de réalisation, le dispositif comporte des moyens pour actionner les moyens de freinage lorsque la consigne de couple minimal délivré par le groupe motopropulseur devient nulle.

Selon une forme particulière de réalisation, le véhicule comporte des moyens pour déterminer un sens de marche souhaité du véhicule et un capteur du sens de marche effectif du véhicule et le dispositif comporte une liaison vers les moyens de freinage et des moyens pour actionner les moyens de freinage lorsque le sens de marche effectif du véhicule ne correspond pas au sens de marche souhaité.

L'invention a également pour objet un procédé de gestion de roulage au ralenti d'un véhicule automobile comprenant un essieu, un groupe motopropulseur pouvant être accouplé à l'essieu, un organe de commande d'un couple délivré par le groupe motopropulseur, des moyens de freinage, un organe de commande des moyens de freinage et des moyens de pilotage permettant de décorréler une consigne de l'organe de commande d'une commande sur les moyens de freinage. Le groupe motopropulseur délivre un couple minimal en l'absence d'action sur l'organe de commande du couple. Selon l'invention, une consigne du couple minimal délivré par le groupe motopropulseur est diminuée en fonction du niveau d'action sur l'organe de commande des moyens de freinage, les moyens de freinage n'étant pas actionnés tant que la consigne de couple minimal n'est pas nulle.

Selon une forme particulière de réalisation, le groupe motopropulseur comporte une machine électrique pouvant fonctionner dans un mode de génération d'énergie mécanique et dans un mode de génération d'énergie électrique et, lorsque la consigne de couple minimal devient nulle, la machine électrique fonctionne dans le mode de génération d'énergie électrique.

Selon une forme particulière de réalisation, lorsque la consigne de couple minimal devient nulle, les moyens de freinage sont actionnés. Cette forme de réalisation peut être utilisée en combinaison ou en alternative avec l'utilisation de la machine électrique dans le mode de génération d'énergie électrique.

Selon une forme particulière de réalisation, le véhicule comporte un capteur d'une vitesse du véhicule et le procédé comporte une étape consistant à actionner les moyens de freinage lorsque la vitesse du véhicule devient nulle. Cette forme de réalisation permet de s'assurer que le véhicule, après avoir atteint une vitesse nulle, restera effectivement à l'arrêt.

Selon une forme particulière de réalisation, le véhicule comporte des moyens pour déterminer un sens de marche souhaité du véhicule et un capteur du sens de marche effectif du véhicule et le procédé comporte une étape consistant à actionner les moyens de freinage lorsque le sens de marche effectif du véhicule ne correspond pas au sens de marche souhaité.

L'invention a notamment pour avantage qu'elle permet au véhicule de rouler à une vitesse constante correspondant à un couple inférieur au couple minimal.

L'invention sera mieux comprise et d'autres avantages apparaîtront à la lecture de la description détaillée d'un mode de réalisation donné à titre d'exemple, description faite en regard d'un dessin annexé qui représente :

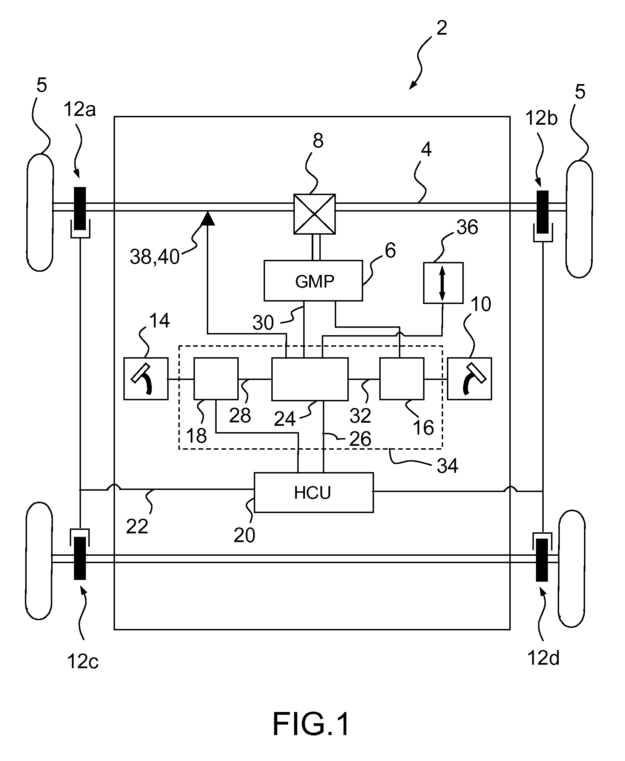

- la figure 1, un véhicule automobile comprenant un dispositif de gestion du roulage au ralenti selon l'invention.

La figure 1 représente un véhicule 2 automobile comprenant un essieu 4, un groupe motopropulseur 6, noté GMP sur la figure 1, pouvant être accouplé à l'essieu 4, par exemple par l'intermédiaire d'un différentiel 8, un organe de commande 10 d'un couple délivré par le groupe motopropulseur 6, des moyens de freinage 12a, 12b, 12c, 12d portant la référence générale 12 et un organe de commande 14 des moyens de freinage 12. L'essieu 4 comporte au moins une roue 5. Le groupe motopropulseur 6 peut comporter un ou plusieurs moteurs de différents types. II peut s'agir aussi bien d'un moteur thermique, d'un moteur électrique, d'un moteur électrique alimenté par une pile à combustible ou d'un moteur hybride, autrement dit combinant plusieurs moteurs de types différents. Les organes de commande 10 et 14 correspondent habituellement aux pédales de frein et d'accélération, respectivement. L'organe de commande 10 du couple est relié au groupe motopropulseur 6, par exemple par l'intermédiaire d'un calculateur 16. De même, l'organe de commande 14 des moyens de freinage 12 est relié aux moyens de freinage 12, par exemple par l'intermédiaire d'un calculateur 18 et d'un bloc de commande hydraulique 20, noté HCU sur la figure 1. En fonction de l'action exercée sur l'organe de commande 14 des moyens de freinage 12, une consigne de frein est transmise au calculateur 18, lequel calcule et transmet une commande de frein au bloc de commande hydraulique 20. Le calculateur 18 permet de découpler l'action sur l'organe de commande 14 de l'action des moyens de freinage. Le calculateur 18 peut par exemple réaliser une fonction d'antiblocage des roues 5 du véhicule 2, mieux connue sous l'acronyme ABS pour l'expression allemande "Antiblockiersystem". Les calculateurs 16 et 18 peuvent être physiquement regroupés afin de former un seul calculateur. En fonction de la commande de frein, le bloc de commande hydraulique 20 commande une pression hydraulique permettant d'actionner les moyens de freinage 12 par l'intermédiaire d'un circuit de freinage 22 reliant le bloc de commande hydraulique 20 aux moyens de freinage 12. Bien entendu, toute autre liaison entre les moyens de freinage 12 et l'organe de commande 14 des moyens de freinage 12 peut être envisagée sans sortir du cadre de l'invention. De façon classique, on considère que le groupe motopropulseur 6 délivre un couple minimal, appelé couple de traînée, en l'absence d'action sur l'organe de commande 10 du couple.

L'invention concerne un dispositif 24 de gestion du roulage au ralenti du véhicule 2 automobile. Le dispositif 24 peut comporter une liaison 26 vers les moyens de freinage 12, une liaison 28 vers l'organe de commande 14 des moyens de freinage 12, cette liaison 28 pouvant être réalisée par l'intermédiaire du calculateur 18, une liaison 30 vers le groupe motopropulseur 6 et une liaison 32 vers l'organe de commande 10 du couple. La liaison 30 vers le groupe motopropulseur 6 permet de transmettre une consigne de couple minimal, autrement dit, le couple que doit transmettre le groupe motopropulseur 6 en l'absence d'action sur l'organe de commande 10 du couple. Selon une forme particulière de réalisation, le dispositif 24 ainsi que les calculateurs 16 et 18 forment un bloc 34 de commande électronique. Le dispositif 24 comporte également des moyens pour diminuer la consigne de couple minimal en fonction du niveau d'action sur l'organe de commande 14 des moyens de freinage 12. Selon l'invention, les moyens de freinage 12 ne sont pas actionnés tant que la consigne de couple minimal n'est pas nulle. Par conséquent, une action sur l'organe de commande 14 des moyens de freinage 12, par exemple la pédale de frein, entraîne d'abord une diminution du couple délivré par le groupe motopropulseur 6 avant d'actionner les moyens de freinage 12. Autrement dit, les moyens de freinage 12 ne sont actionnés que lorsque le groupe motopropulseur 6 ne délivre plus de couple à l'essieu 4 du véhicule 2. II ne peut alors plus y avoir d'actions concurrentes entre le groupe motopropulseur 6 et les moyens de freinage 12.

Selon une forme particulière de réalisation, le groupe motopropulseur 6 comporte une machine électrique pouvant fonctionner dans un mode de génération d'énergie mécanique et dans un mode de génération d'énergie électrique. Autrement dit, la machine électrique peut soit convertir de l'énergie électrique, par exemple stockée dans une batterie, en énergie mécanique afin de fournir un couple à l'essieu 4, soit convertir l'énergie mécanique, en particulier l'énergie cinétique du véhicule 2, en énergie électrique, cette énergie électrique pouvant être utilisée afin de recharger la batterie. Selon cette forme particulière de réalisation, le dispositif 24 comporte des moyens pour faire fonctionner la machine électrique dans le mode de génération d'énergie électrique lorsque la consigne de couple minimal délivré par le groupe motopropulseur 6 devient nulle. En particulier, la machine électrique peut être utilisée dans le mode de génération d'énergie électrique pour une consigne de couple minimal inférieure à un seuil prédéterminé. Cette forme de réalisation permet de récupérer l'énergie cinétique du véhicule 2 lors du freinage.

Selon une forme particulière de réalisation, le dispositif 24 comporte des moyens pour actionner les moyens de freinage 12 lorsque la consigne de couple minimal délivré par le groupe motopropulseur 6 devient nulle. Cette forme de réalisation peut être utilisée en combinaison ou en alternative avec l'utilisation de la machine électrique dans le mode de génération d'énergie électrique.

Selon une forme particulière de réalisation, le véhicule 2 comporte des moyens 36 pour déterminer un sens de marche souhaité du véhicule 2 et un capteur 38 du sens de marche effectif du véhicule 2, les moyens 36 et le capteur 38 étant reliés au dispositif 24. Les moyens 36 pour déterminer le sens de marche souhaité du véhicule 2 peuvent comporter un capteur dans la boîte de vitesses ou au niveau d'un levier de vitesses, ce capteur permettant de déterminer la vitesse enclenchée. Le capteur 38 du sens de marche effectif peut être un capteur 40 de vitesse déterminant une vitesse du véhicule 2. Selon cette forme de réalisation, le dispositif 24 comporte des moyens pour actionner les moyens de freinage 12 lorsque le sens de marche effectif du véhicule 2 ne correspond pas au sens de marche souhaité. L'intérêt de cette forme de réalisation est d'empêcher que le véhicule 2 ne se déplace dans le sens opposé au sens de marche souhaité. Le véhicule 2 est par exemple entraîné dans le sens opposé au sens de marche souhaité lorsqu'il se situe en pente. Dans cette condition, le couple minimal délivré par le groupe motopropulseur peut en effet être insuffisant pour compenser le couple généré par la pente. Selon une autre forme de réalisation, le dispositif 24 comporte des moyens pour actionner un frein secondaire, par exemple un frein de stationnement actionné électriquement, à la place des moyens de freinage 12.

L'invention concerne également un procédé de gestion de roulage au ralenti d'un véhicule 2 automobile tel que décrit précédemment. Selon l'invention, la consigne de couple minimal délivré par le groupe motopropulseur 6 est diminuée en fonction du niveau d'action sur l'organe de commande 14 des moyens de freinage 12, les moyens de freinage 12 n'étant pas actionnés tant que la consigne de couple minimal n'est pas nulle.

## Revendications

1. Dispositif de gestion de roulage au ralenti d'un véhicule (2) automobile comprenant un essieu (4), un groupe motopropulseur (6) pouvant être accouplé à l'essieu (4), un organe de commande (10) d'un couple délivré par le groupe motopropulseur (6), des moyens de freinage (12), un organe de commande (14) des moyens de freinage (12) et des moyens de pilotage (18) permettant de décorréler une consigne de l'organe de commande (14) d'une commande sur les moyens de freinage (12), le groupe motopropulseur (6) délivrant un couple minimal en l'absence d'action sur l'organe de commande (10) du couple, **caractérisé en ce qu'**il comporte une liaison (28) vers l'organe de commande (14) des moyens de freinage (12), une liaison (30) vers le groupe motopropulseur (6) permettant de transmettre une consigne de couple minimal et des moyens pour diminuer la consigne de couple minimal délivré par le groupe motopropulseur (6) en fonction du niveau d'action sur l'organe de commande (14) des moyens de freinage (12), les moyens de freinage (12) n'étant pas actionnés tant que la consigne de couple minimal n'est pas nulle.

2. Dispositif selon la revendication 1, **caractérisé en ce que** le groupe motopropulseur (6) comporte une machine électrique pouvant fonctionner dans un mode de génération d'énergie mécanique et dans un mode de génération d'énergie électrique et **en ce que** le dispositif (24) comporte des moyens pour faire fonctionner la machine électrique dans le mode de génération d'énergie électrique lorsque la consigne de couple minimal délivré par le groupe motopropulseur (6) devient nulle.

3. Dispositif selon l'une des revendications 1 ou 2, **caractérisé en ce que** le dispositif (24) comporte une liaison (26) vers les moyens de freinage (12) et des moyens pour actionner les moyens de freinage (12) lorsque la consigne de couple minimal devient nulle.

4. Dispositif selon l'une des revendications 1 à 3, **caractérisé en ce que** le véhicule (2) comporte des moyens (36) pour déterminer un sens de marche souhaité du véhicule (2) et un capteur (38, 40) du sens de marche effectif du véhicule (2) et **en ce que** le dispositif (24) comporte une liaison (26) vers les moyens de freinage (12) et des moyens pour actionner les moyens de freinage (12) lorsque le sens de marche effectif du véhicule (2) ne correspond pas au sens de marche souhaité.

5. Procédé de gestion de roulage au ralenti d'un véhicule (2) automobile comprenant un essieu (4), un groupe motopropulseur (6) pouvant être accouplé à l'essieu (4), un organe de commande (10) d'un couple délivré par le groupe motopropulseur (6), des moyens de freinage (12), un organe de commande (14) des moyens de freinage (12) et des moyens de pilotage (18) permettant de décorréler une consigne de l'organe de commande (14) d'une commande sur les moyens de freinage (12), le groupe motopropulseur (6) délivrant un couple minimal en l'absence d'action sur l'organe de commande (10) du couple, **caractérisé en ce qu'**une consigne du couple minimal délivré par le groupe motopropulseur (6) est diminuée en fonction du niveau d'action sur l'organe de commande (14) des moyens de freinage (12), les moyens de freinage (12) n'étant pas actionnés tant que la consigne de couple minimal n'est pas nulle.

6. Procédé selon la revendication 5, **caractérisé en ce que** le groupe motopropulseur (6) comporte une machine électrique pouvant fonctionner dans un mode de génération d'énergie mécanique et dans un mode de génération d'énergie électrique et **en ce que**, lorsque la consigne de couple minimal devient nulle, la machine électrique fonctionne dans le mode de génération d'énergie électrique.

7. Procédé selon l'une des revendications 5 ou 6, **caractérisé en ce que**, lorsque la consigne de couple minimal devient nulle, les moyens de freinage (12) sont actionnés.

8. Procédé selon l'une des revendications 5 à 7, **caractérisé en ce que** le véhicule (2) comporte un capteur (40) d'une vitesse du véhicule (2) et **en ce que**, lorsque la vitesse du véhicule (2) devient nulle, les moyens de freinage (12) sont actionnés.

9. Procédé selon l'une des revendications 5 à 8, **caractérisé en ce que** le véhicule (2) comporte des moyens (36) pour déterminer un sens de marche souhaité du véhicule (2) et un capteur (38, 40) du sens de marche effectif du véhicule (2) et **en ce que**, lorsque le sens de marche effectif du véhicule (2) ne correspond pas au sens de marche souhaité, les moyens de freinage (12) sont actionnés.
